# EUROPEAN PATENT APPLICATION

(11) **EP 1 568 626 A1**
(43) Date of publication of application: **31.08.2005**
(21) Application number: 04075583.7
(22) Date of filing: 25.02.2004
(51) Int. Cl.: B65G 17/08

(54) **Plastic belt element and conveyor belt comprising such elements**

(71) Applicant: Ashworth Jonge Poerink B.V., 7622 BE Borne (NL)
(72) Inventor: van Faassen, Willem, 7556 LN Hengelo (OV) (NL)
(74) Representative: 't Jong, Bastiaan Jacobus

(57) **Abstract**

The invention relates to a plastic belt element (1) having a central axis (2) and comprising a plurality of protrusions (3,4) extending on either side of the central axis (2), wherein each protrusion (3,4) has at least one slot shaped opening (6) in line with slot shaped openings (6) of adjacent protrusions (3,4) extending on the same side of the central axis (2).

## Description

The invention relates to a plastic belt element. Such elements are widely known. When such belt elements are used in, for example, the food industry, the belt elements must meet very specific requirements. One of these requirements is that the belt elements must meet FDA standards. This means that such a belt could be inspected at any time. The inspection is mainly focussed on the presence of dirt and bacteria, which is of course unwanted in the food industry.

Plastic belt elements are known in the prior art. Such belt elements are connected to each other by rods. These rods extend through openings in the belt elements. These openings are adapted to the dimensions of the rod, thereby making it difficult to inspect whether any unwanted material is present in the holes, through which the rod extends.

It is an object of the invention to provide a plastic belt element, which does not have the above mentioned disadvantages.

This object is achieved by a plastic belt element according to the invention, said plastic belt element having a central axis and comprising a plurality of protrusions extending on either side of the central axis, wherein each protrusion has at least one slot shaped opening in line with slot shaped openings of adjacent protrusions extending on the same side of the central axis.

As the plastic belt element according to the invention has slot shaped openings, the rod extending through it can be shifted in the length of the slot, such that the rod can be moved away in order to inspect whether the belt element is clean. The feature that the rod can be loosely arranged in the belt element has the further advantage, that cleaning is facilitated. The washing device can more easily reach the space in the slot shaped openings. Also due to the loose arrangement of the rods in the slot openings, dirt getting into the slot openings will be scraped out of the openings by the loosely arranged rods.

In a preferred embodiment of the plastic belt element according to the invention, the protrusions are alternatingly arranged on either side of the central axis.

In another embodiment according to the invention the protrusions on one side of the central axis are spaced apart to enable intermeshing with the protrusions on the other side of an adjecent plastic belt element, when these belt elements are combined to form a conveyor belt, the adjacent belt elements can shift into each other making curves in the plane of the conveyor belt possible.

In a specific preferred embodiment of the plastic belt element according to the invention, the element comprises a plate element substantially perpendicular arranged on at least one of the protrusions. With such belt elements it is possible to build so-called stacker belts. A stacker belt is a conveyor belt, which is generally spirally arranged, wherein parts of the conveyor belt at least partially rest on top of other parts of the conveyor belt. The plate element provides for a support.

As the rods are loosely arranged in the belt elements, a stacker belt can be easily inspected, without having to disassemble the complete stacker belt. Simply by moving the rods within the slot shaped openings, one can inspect whether the belt is clean.

Preferably the plate element and the related at least one protrusion are monolithical. This provides for a stiff construction of the belt element.

The plate element is preferably arranged on an extremity of the plastic belt element.

The invention further relates to a conveyor belt comprising a plurality of plastic belt elements according to the invention, wherein the plastic belt elements are arranged intermeshing, and comprising a number of rods, extending through the aligned slot shaped openings of a plastic belt element and through the aligned slot shaped openings of an adjecent plastic belt element in order to connect two adjecent belt elements.

In a preferred embodiment, the rods are movable in a direction substantially perpendicular to the central axis of the belt elements.

These and other features and advantages of the invention will be elucidated in conjunction with the accompanying drawings.

Figure 1 shows a perspective view of a first embodiment of a plastic belt element according to the a plastic belt element according to the invention stacked on top of each other.

Figure 4 shows a top view of a conveyor belt composed out of belt elements according to figure 3.

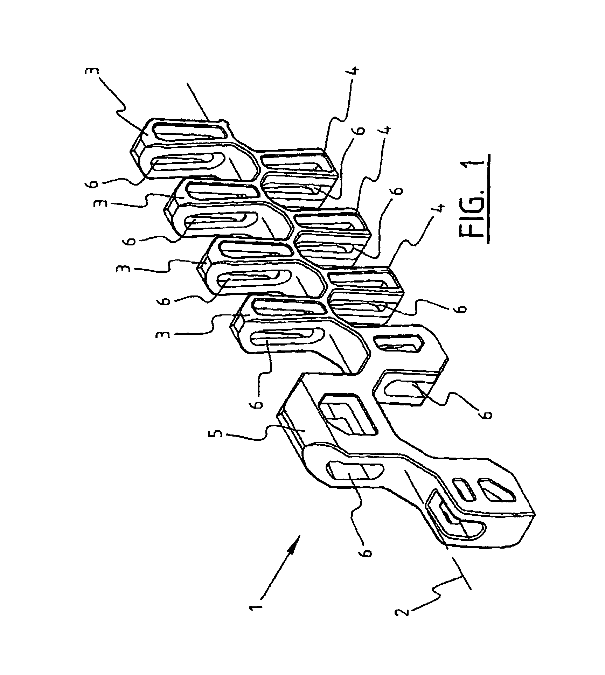

Figure 1 shows a plastic belt element 1 having a central axis 2. Protrusions 3, 4 are arranged on both sides of this central axis 2. An end link element 5 is furthermore arranged in the belt element 1. This end link element 5 is used for driving the belt element.

Each protrusions 3, 4 has a slot shaped opening 6. The slot shaped openings 6 arranged in the protrusions 3 are aligned and the openings 6 of the protrusions 4 are aligned.

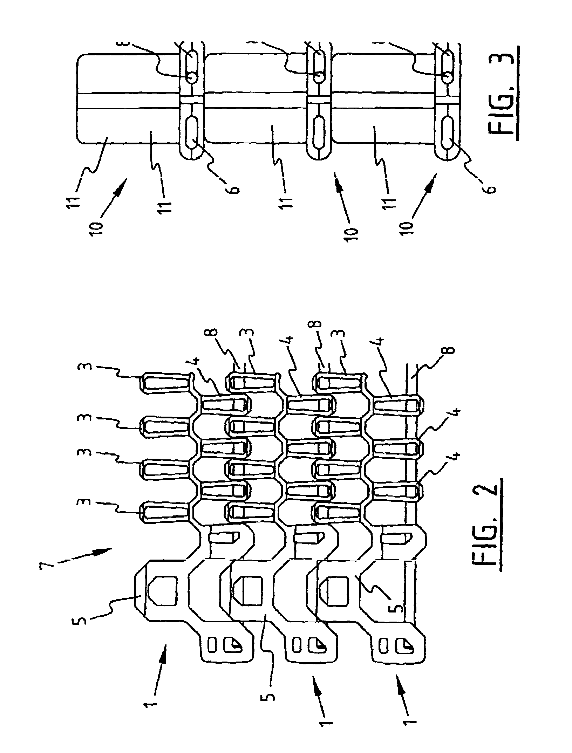

In figure 2 a conveyor belt 7 is shown, composed out of plastic belt elements 1. The plastic belt elements 1 are connected by rods 8. These rods extend through the slot shaped openings 6.

The protrusions 3 on one side of the central axis 2 are spaced apart, leaving room between the protrusions. The protrusions 4 on the other side of an adjacent plastic belt element 1 are also spaced apart. This enables an intermeshing relation between two adjacent belt elements 1.

Figure 3 shows a second embodiment of a plastic belt element 10 according to the invention. These plastic belt elements are stacked on top of each other. The elements 10 are supported by a plate element 11 of the belt element 10 below.

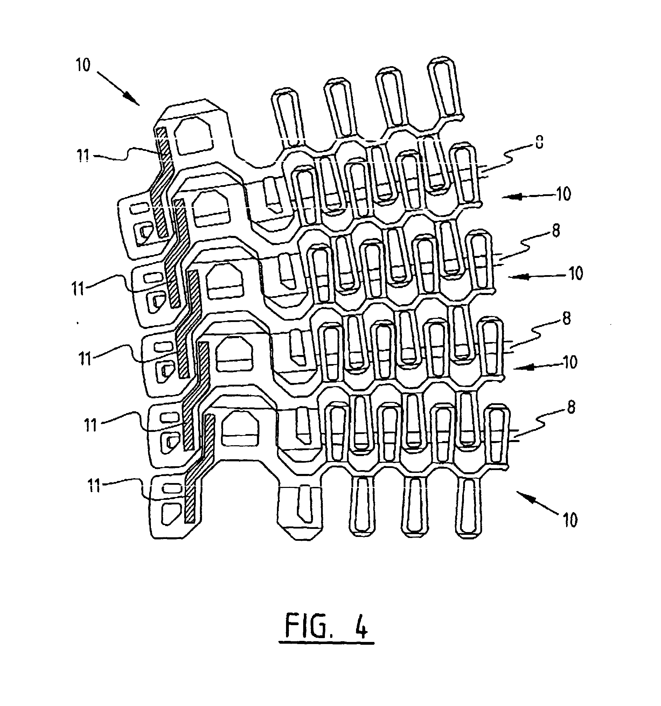

Figure 4 shows a top view of the belt elements 10. In this view the belt elements form a curved conveyor belt. It can clearly be seen that due to the slot shaped openings 6, the rods 8 can move freely, such that the conveyor belt can be inspected easily.

## Claims

**1.** Plastic belt element having a central axis and comprising a plurality of protrusions extending on either side of the central axis, wherein each protrusion has at least one slot shaped opening in line with slot shaped openings of adjacent protrusions extending on the same side of the central axis.

**2.** Plastic belt element according to claim 1, wherein the protrusions are alternatingly arranged on either side of the central axis.

**3.** Plastic belt element according to claim 1 or 2, wherein the protrusions on one side of the central axis are preceding claims, comprising a plate element substantially perpendicular arranged on at least one of the protrusions.

**5.** Plastic belt element according to claim 4, wherein the plate element and the related at least one protrusion are monolithical.

**6.** Plastic belt element according to claim 4 or 5, wherein the plate element is arranged on an extremity of the plastic belt element.

**7.** Conveyor belt comprising a plurality of plastic belt elements according to any of the preceding claims, wherein the plastic belt elements are arranged intermeshing, and comprising a number of rods, extending through the aligned slot shaped openings of a plastic belt element and through the aligned slot shaped openings of an adjacent plastic belt element in order to connect two adjacent belt elements.

**8.** Conveyor belt according to claim 7, wherein the rods are movable in a direction substantially perpendicular to the central axis of the belt elements.
